# EUROPÄISCHE PATENTSCHRIFT

(11) **EP 3 076 636 B1**
(45) Veröffentlichungstag und Bekanntmachung des Hinweises auf die Patenterteilung: **17.01.2018**
(21) Anmeldenummer: 15162021.8
(22) Anmeldetag: 31.03.2015
(51) Int. Cl.: H04L 29/12, H04L 29/08

(54) **VERFAHREN ZUR BEREITSTELLUNG EINES NAMENSDIENSTES INNERHALB EINES INDUSTRIELLEN KOMMUNIKATIONSSYSTEMS UND NAMENSDIENST-SERVER**
METHOD FOR PROVIDING A NAME SERVICE WITHIN AN INDUSTRIAL COMMUNICATION SYSTEM AND NAME SERVICE SERVER
PROCÉDÉ DE PRÉPARATION D'UN SERVICE DE DÉNOMINATION DANS UN SYSTÈME DE COMMUNICATION INDUSTRIELLE ET SERVEUR DE DÉNOMINATION

(43) Veröffentlichungstag der Anmeldung: 05.10.2016
(73) Patentinhaber: Siemens Aktiengesellschaft, 80333 München (DE)
(72) Erfinder: Albrecht, Harald, 90475 Nürnberg (DE)

(56) Entgegenhaltungen:
- EP-A1- 1 965 540
- JAE-HOON JEONG BYUNG-YEOB KIM JUNG-SOO PARK HYOUNG-JUN KIM ETRI: "IPv6 Router Advertisement based DNS Autoconfiguration; draft-jeong-ipv6-ra-dns-autoconf-00.txt", 20030417, 17. April 2003 (2003-04-17), XP015003801, ISSN: 0000-0004
- SOOHONG PARK ET AL: "DNS Configuration in IPv6: Approaches, Analysis, and Deployment Scenarios", IEEE INTERNET COMPUTING, IEEE SERVICE CENTER, NEW YORK, NY.- INSTITUTE OF ELECTRICAL AND ELECTRONICS ENGINEERS, US, Bd. 17, Nr. 4, 1. Juli 2013 (2013-07-01), Seiten 48-56, XP011516336, ISSN: 1089-7801, DOI: 10.1109/MIC.2012.96
- JEONG BROCADE/ETRI S PARK SAMSUNG ELECTRONICS L BELOEIL FRANCE TELECOM R&D S MADANAPALLI IRAM TECHNOLOGIES J: "IPv6 Router Advertisement Options for DNS Configuration; rfc6106.txt", IPV6 ROUTER ADVERTISEMENT OPTIONS FOR DNS CONFIGURATION; RFC6106.TXT, INTERNET ENGINEERING TASK FORCE, IETF; STANDARD, INTERNET SOCIETY (ISOC) 4, RUE DES FALAISES CH- 1205 GENEVA, SWITZERLAND, 30. November 2010 (2010-11-30), Seiten 1-19, XP015075838, [gefunden am 2010-11-30]
- DANIEL PARK SYAM MADANAPALLI SAMSUNG ELECTRONICS S: "IPv6 Extensions for DNS Plug and Play; draft-park-ipv6-extensions-dns-pnp-00.txt" , 20030401, 1. April 2003 (2003-04-01), XP015004780, ISSN: 0000-0004

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echtzeit-Kommunikationsprotokolle, wie PROFINET, PROFIBUS oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung kurzer Datenrahmen mit Echtzeitanforderungen konkurrierend für eine Übermittlung von Datenrahmen mit großem Nutzdateninhalt beansprucht werden. Dies kann zu einer verzögerten Übermittlung der Datenrahmen mit Echtzeitanforderungen oder sogar zu einem Verlust einzelner solcher Datenrahmen führen.

In WO 2007/144364 A1 ist ein Verfahren zur Vernetzung einer automatisierten Anlage beschrieben, die zumindest eine Zelle mit einem Subnetz umfasst. Das Subnetz ist über einen Router an ein weiteres Subnetz der automatisierten Anlage angebunden. Zur Vernetzung der automatisierten Anlage wird eine Multicastgruppe bereitgestellt, die sich über beide Subnetze erstreckt. Mittels der Multicastgruppe wird eine Kommunikationsnetzadresse einer Kommunikationsnetzschnittstelle einer Baugruppe detektiert. Dabei ist die Baugruppe der Multicastgruppe zuvor über die Kommunikationsnetzadresse beigetreten, und die Kommunikationsnetzschnittstelle ist zuvor an das Subnetz angeschlossen worden. Über die Kommunikationsnetzadresse wird ein Name an die Kommunikationsnetzschnittstelle der Baugruppe zugewiesen. In einem weiteren Schritt erfolgt eine Ermittlung einer weiteren Kommunikationsnetzadresse der Kommunikationsnetzschnittstelle der Baugruppe, die zumindest einen Teil einer numerischen Repräsentation des Namens aufweist.

US 2005 0041671 A1 offenbart ein Kommunikationssystem mit zumindest einem ersten und zweiten Router, bei dem der zweite Router zumindest ein IPv6-Adresspräfix vom ersten Router anfordert. Dabei umfasst der erste Router eine Speichereinheit für IPv6-Adresspräfixe, von denen ein zumindest IPv6-Adresspräfix auf Anforderung des zweiten Routers bekanntgegeben wird. Der zweite Router umfasst eine Einheit zur Erzeugung eines weiteren IPv6-Adresspräfixes auf Basis des durch den ersten Router bekanntgegebenen IPv6-Adresspräfixes. Der weitere IPv6-Adresspräfix wird von einem an den zweiten Router angeschlossenen Kommunikationsgerät zur Erzeugung einer IPv6-Adresse verwendet und hierzu durch den zweiten Router bekanntgegeben.

In US 8 194 661 B2 ist ein Verfahren zur automatischen Konfiguration eines Kommunikationsgeräts innerhalb eines segmentierten Kommunikationsnetzes beschrieben, bei dem durch eine Überwachungseinheit überprüft wird, ob ein empfangenes IPv6-Datenpaket eine Router-Bekanntgabe (Router Advertisement) oder eine Router-Abfrage (Router Solicitation) umfasst. Im Fall einer Router-Abfrage wird eine MAC-Absender-Adresse des Datenpakets durch die Überwachungseinheit aus dem IPv6-Datenpaket entfernt. Außerdem wird durch die Überwachungseinheit eine externe MAC-Adresse in das IPv6-Datenpaket eingefügt, um dieses als Multicast-Nachricht an einem Router weiterzuleiten. Bei einer Router-Bekanntgabe entfernt die Überwachungseinheit eine MAC-Router-Adresse aus dem IPv6-Datenpaket und fügt stattdessen eine interne MAC-Adresse in das IPv6-Datenpaket ein, um dieses als Unicast-Nachricht an das zu konfigurierende Kommunikationsgerät weiterzuleiten.

Aus der älteren europäischen Patentanmeldung mit der Veröffentlichungsnummer EP2940972 ist ein Verfahren zur Bereitstellung eines Namensdienstes innerhalb eines industriellen Kommunikationssystems bekannt, bei dem IPv6-Präfixe durch Router mittels Nachrichten mit Router-Bekanntgaben in jeweils unterlagerten Teilnetzen verbreitet werden. Dabei umfassen die Router-Bekanntgaben einen topologischen bzw. hierarchischen Namensbestandteil des jeweiligen Routers, der einer räumlichen oder hierarchischen Anordnung des jeweiligen Routers zugeordnet ist. Router-Bekanntgaben mit Namensinformationen aus überlagerten Teilnetzen werden durch unterlagerten Teilnetzen zugeordnete Router entgegen genommen und um einen dem jeweiligen Router zugeordneten topologischen bzw. hierarchischen Namensbestandteil ergänzt und innerhalb des jeweiligen unterlagerten Teilnetzes verbreitet. Aus topologischen bzw. hierarchischen Namensbestandteilen und einem innerhalb ihres jeweiligen Teilnetzes eindeutigen Namensbestandteil erzeugen Kommunikationsendgeräte selbständig ihren Gerätenamen. Dieses Dokument offenbart den Stand der Technik gemäß Art. 54(3) EPÜ. In der älteren europäischen Patentanmeldung mit dem Anmeldeaktenzeichen EP 14171757.9 ist ein Verfahren zur Vergabe von Kommunikationsnetzadressen für Netzteilnehmer eines segmentierten Netzes mit mehreren Subnetzen beschrieben. Die Subnetze sind jeweils über einen Subnetz-Router an ein sie verbindendes Sammelnetz angeschlossen. Dabei wird von den Subnetz-Routern durch einen Austausch von über das Sammelnetz verteilten Router-Nachrichten dezentral ein gemeinsamer Adressbereich ermittelt, und innerhalb des Adressbereichs werden Kommunikationsnetzadressen für die Netzteilnehmer festgelegt.

In Internet Engineering Task Force (IETF), Request for Comments (RFC) 6106, ISSN 2070-1721, November 2010 (siehe http://www.rfc-base.org/txt/rfc-6106.txt) ist eine Erweiterung von Router Advertisements beschrieben, die es ermöglicht, Kommunikationsgeräten einen zu benutzenden DNS-Server (Domain Name System) automatisch mitzuteilen. Damit bedarf es keiner manuellen Konfiguration des DNS-Servers in den Kommunikationsgeräten. Darüber hinaus ist ermöglicht RFC 4861, September 2007 (siehe http://www.rfc-base.org/txt/rfc-4861.txt), dass Router Advertisements durch Kommunikationsgeräte versendet werden, die keine Router sind.

Aus RFC 2136, April 1997 (siehe https://www.ietf.org/rfc/ rfc2136.txt) ist ein als DNS Update bekanntes Verfahren für dynamisches DNS bekannt, bei dem ein Master-Nameserver empfangene Dynamic Update Requests während einer Sammelphase lediglich zwischenspeichert, bevor er zugeordnete Einträge in seiner Zonendatei aktualisiert. Eine solche Sammelphase kann mehrere Minuten dauern, so dass dynamische Aktualisierungen nicht sofort an etwaige Slave-Nameserver weitergegeben werden, die eine Kopie der Zonendatei verwalten. Das Dokument "IPv6 Router Advertisement based DNS Autoconfiguration"; Jeong, Jae-Hoon , 13. April 2003 offenbart DNS Autokonfiguraton mittels Router Advertisements. Der vorliegenden Erfindung liegt die Aufgabe zugrunde, ein einfach realisierbares Verfahren zur Bereitstellung eines Namensdienstes innerhalb eines industriellen Kommunikationssystems zu schaffen, das ein effizientes und zuverlässiges Ansprechen von vernetzten Automatisierungsgeräten über komfortabel handhabbare Namen ermöglicht, und ein geeignetes Kommunikationsgerät anzugeben.

Diese Aufgabe wird erfindungsgemäß durch ein Verfahren mit den in Anspruch 1 angegebenen Merkmalen und durch einen Namensdienst-Server mit den in Anspruch 14 angegebenen Merkmalen gelöst. Vorteilhafte Weiterbildungen der vorliegenden Erfindung sind in den abhängigen Patentansprüchen angegeben.

Die vorliegende Erfindung wird nachfolgend an einem Ausführungsbeispiel anhand der Zeichnung näher erläutert.

Es zeigt
- Figur 1: eine schematische Darstellung eines industriellen Automatisierungssystems mit einem DNS-Server, mehreren Teilnetzen und zu konfigurierenden Automatisierungsgeräten,
- Figur 2: eine schematische Darstellung einer Übermittlung einer DNS-Server-Adressinformation an einen Router,
- Figur 3: eine schematische Darstellung eines Datenaustauschs zwischen dem DNS-Server, IPv6-Routern und einem zu konfigurierenden Automatisierungsgerät.

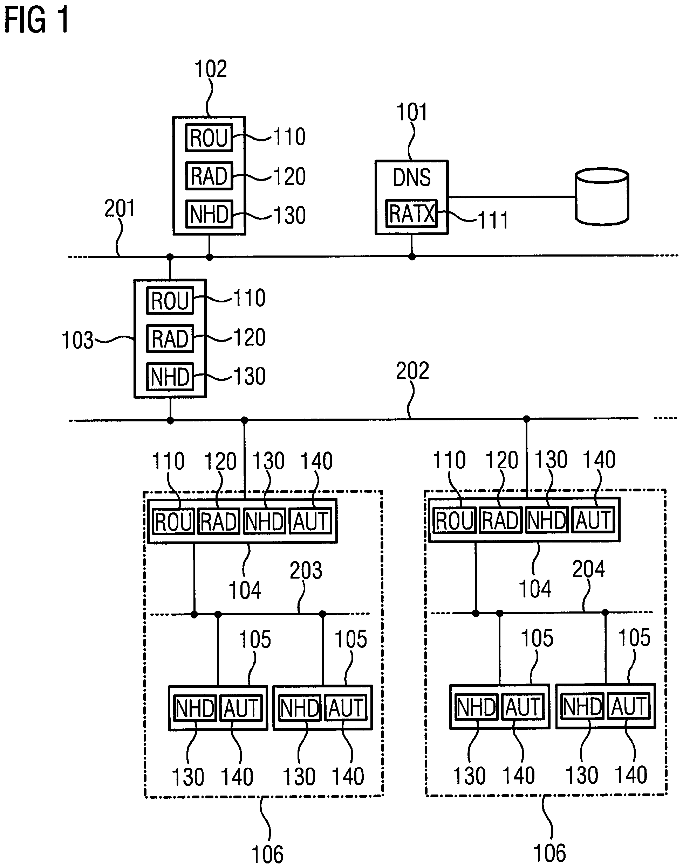

Das in Figur 1 schematisch dargestellte industrielle Automatisierungssystem umfasst einen DNS-Server 101 (Domain Name System) ohne Routing-Funktion, einen Router 102, der einer Basis-Domäne zugeordnet ist, mehrere Teilnetze 201-204 mit zugeordneten Routern 103 bzw. Routing-Funktionen aufweisenden Automatisierungsgeräten 104 und eine Mehrzahl modularer Automatisierungsgeräte 105 ohne Routing-Funktionen. Die Automatisierungsgeräte 105 sind beispielsweise speicherprogrammierbare Steuerungen einer komplexen Maschine 106 und umfassen jeweils ein Kommunikationsmodul mit einer Funktionseinheit 130 zur Implementierung eines verteilten Namensdienstes (Name Hierarchy Daemon) und ein Automatisierungsmodul 140. Eine komplexe Maschine 106 kann auch Automatisierungsgeräte 104 mit einem integrierten Routing-Modul 110 und einer Funktionseinheit 120 zur Verbreitung von Router Advertisements (Router Advertisement Daemon) innerhalb eines maschineninternen Teilnetzes 203, 204 umfassen.

Die Automatisierungsmodule 140 umfassen jeweils zumindest eine Zentraleinheit und eine Eingabe/Ausgabe-Einheit. Die Eingabe/Ausgabe-Einheiten dienen einem Austausch von Steuerungs- und Messgrößen zwischen dem jeweiligen Automatisierungsgerät 104, 105 und einer durch das Automatisierungsgerät 104, 105 gesteuerten Maschine oder Vorrichtung. Die Zentraleinheiten der Automatisierungsmodule 140 sind insbesondere für eine Ermittlung geeigneter Steuerungsgrößen aus erfassten Messgrößen vorgesehen. Obige Komponenten der Automatisierungsgeräte 104, 105 sind im vorliegenden Ausführungsbeispiel über ein Rückwandbus-System miteinander verbunden.

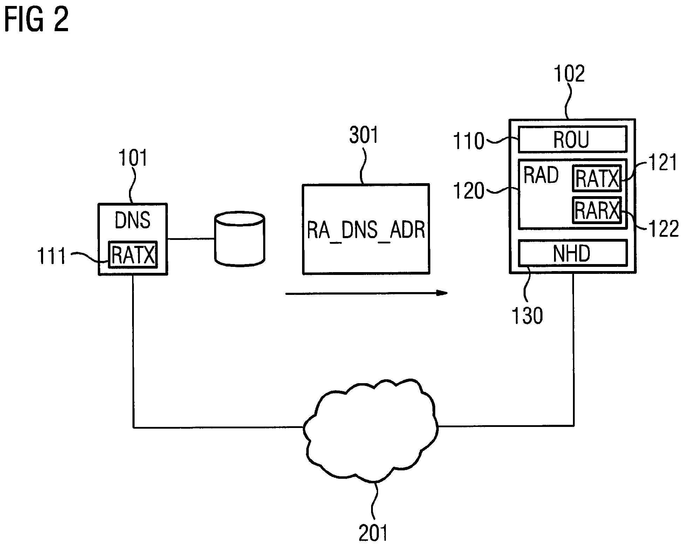

Entsprechend Figur 2 versendet der DNS-Server 101 Nachrichten 301 mit Router Advertisements, die Informationen über eine IPv6-Adresse des DNS-Servers 101 umfassen. Hierzu weist der DNS-Server 101 eine Sendeeinheit 111 zur Erzeugung und Übermittlung von Nachrichten 301 mit Router Advertisements auf, welche die IPv6-Adresse des DNS-Servers 301 umfassen. Dabei werden die Nachrichten 301, welche die IPv6-Adresse des DNS-Servers 101 umfassen, entsprechend RFC 4861 und RFC 6106 übermittelt. Die Nachrichten 301 mit Router Advertisements, welche die IPv6-Adresse des DNS-Servers 301 umfassen, können entweder direkt an zu konfigurierende Kommunikations- bzw. Automatisierungsgeräte übermittelt oder durch Router im Rahmen einer Übermittlung eigener Router Advertiments dorthin weitergeleitet werden. Grundsätzlich sind Router für eine Übermittlung der IPv6-Adresse des DNS-Servers 101 an diesbezüglich zu konfigurierende Kommunikations- bzw. Automatisierungsgeräte nicht zwingend erforderlich.

Sämtliche Router 102, 103 umfassen im vorliegenden Ausführungsbeispiel neben einem Routing-Modul 110 einen Router Advertisement Daemon 120 und einen Name Hierarchy Daemon 130. Mittels der Router Advertisement Daemons 120 verbreiten die Router 102, 103 bzw. Automatisierungsgeräte 104 mit Routing-Funktionen IPv6-Präfixe in jeweils unterlagerten Teilnetzen 201-204. Dabei sind die IPv6-Präfixe Bestandteile von Nachrichten mit Router Advertisements, die entsprechend Internet Control Message Protocol Version 6 übermittelt werden. Die Router Advertisements umfassen einen topologischen bzw. hierarchischen Namensbestandteil des jeweiligen Routers, wobei der topologische bzw. hierarchische Namensbestandteil einer räumlichen oder hierarchischen Anordnung des jeweiligen Routers zugeordnet ist.

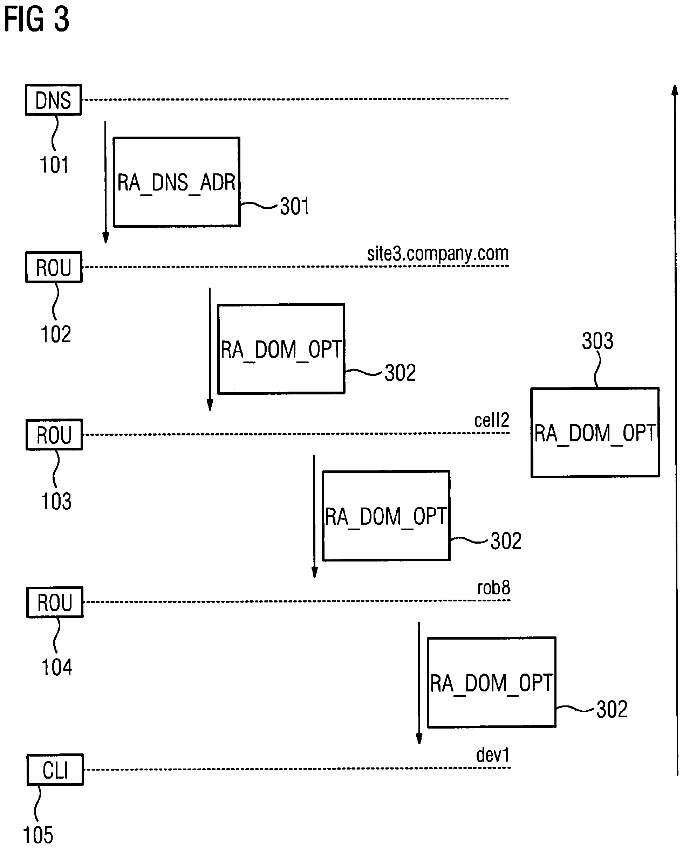

Entsprechend Figur 3 empfängt der Router 102, welcher der Basis-Domäne zugeordnet ist, vom DNS-Server 101 die Nachricht 301 mit Router Advertisement, welche die IPv6-Adresse des DNS-Servers 301 umfasst, und übernimmt diese Information für seine eigenen Router Advertisements. Hierbei fügt der Router 102 seinen Nachrichten 301 mit Router Advertisements im vorliegenden Ausführungsbeispiel den Namensbestandteil "site3.company.com" mittels einer herstellerspezifische Option RA_DOM_OPT hinzu. Durch jeden unterlagerten Router 103 bzw. jedes Automatisierungsgerät 104 mit Routing-Funktionen wird ein weiterer topologischer bzw. hierarchischer Namensbestandteil ergänzt, der einer räumlichen oder hierarchischen Anordnung des jeweiligen Routers 103 bzw. Automatisierungsgeräts 104 zugeordnet ist. Entsprechende räumliche oder hierarchische Angaben, im vorliegenden Ausführungsbeispiel "cell2" und "rob8" werden dabei wahlweise zu einer bereits vorhandenen Option RA_DOM_OPT hinzugefügt oder als weitere Optionen RA_DOM_OPT angehängt. Alternativ zur Option RA_DOM_OPT kann beispielsweise auch ein erster Eintrag in einer DNS-Suchliste für eine sukzessive Ergänzung von topologischen bzw. hierarchischen Namensbestandteilen genutzt werden.

Router Advertisements mit Namensinformationen aus überlagerten Teilnetzen werden mittels des jeweiligen Name Hierarchy Daemon 130 durch unterlagerten Teilnetzen zugeordnete Router 102 bzw. Automatisierungsgeräte 103 entgegen genommen und um einen dem jeweiligen Router 102 bzw. Automatisierungsgerät 103 zugeordneten topologischen bzw. hierarchischen Namensbestandteil ergänzt. Mittels des jeweiligen Router Advertisement Daemon 120 werden die Router Advertisements mit den ergänzten Namensinformationen innerhalb des jeweiligen unterlagerten Teilnetzes verbreitet. Zur Entgegennahme und Auswertung von Nachrichten mit Router Advertisements, welche die IPv6-Adresse des Namensdienst-Servers 101 umfassen, umfassen die Router Advertisement Daemons 120 jeweils eine in Figur 2 dargestellte dedizierte Empfangs- und Auswerteeinheit 122. Für eine Weiterleitung der um einen dem jeweiligen Router zugeordneten topologischen bzw. hierarchischen Namensbestandteil und um die IPv6-Adresse des Namensdienst-Servers ergänzten Router Advertisements ist in den Router Advertisement Daemons 120 jeweils eine Funktionseinheit zur Verbreitung von Router Advertisements vorgesehen.

Die Automatisierungsgeräte 103, 104 erzeugen jeweils mittels ihres Name Hierarchy Daemon 130 aus empfangenen topologischen bzw. hierarchischen Namensbestandteilen und einem innerhalb ihres jeweiligen Teilnetzes eindeutigen Namensbestandteil selbständig ihren Gerätenamen. Hierzu werten die Automatisierungsgeräte 103, 104 die herstellerspezifische Option RA_DOM_OPT der Router Advertisements aus. Darüber hinaus erzeugen die Automatisierungsgeräte 103, 104 aus mittels Router Advertisements innerhalb ihres jeweiligen Teilnetzes verbreiteten IPv6-Präfixen selbständig ihre IPv6-Adresse. Die Name Hierarchy Daemons 130 der Automatisierungsgeräte 103, 104 umfassen jeweils einen Namensdienst-Client für dynamisches DNS umfassen, mittels dessen anhand der IPv6-Adresse des Namensdienst-Servers eine Speicherung einer IPv6-Adresse und eines zugeordneten Gerätenamens des jeweiligen Kommunikationsgeräts im Namensdienst-Server anfordert wird. Hierzu übermitteln die Automatisierungsgeräte 103, 104 entsprechend RFC 2136 jeweils selbständig eine Nachricht 303 mit einer Registrierungsanforderung an den DNS-Server 101, durch die eine Speicherung ihrer Gerätename-Adress-Zuordnung im Namensdient-Server ausgelöst wird.

## Patentansprüche

1. Verfahren zur Bereitstellung eines Namensdienstes innerhalb eines industriellen Automatisierungssystems, bei dem
- ein Namensdienst-Server (101) des industriellen Automatisierungssystems Nachrichten (301) mit Router-Bekanntgaben versendet, die Informationen über eine IPv6-Adresse des Namensdienst-Servers umfassen,
- Kommunikationsendgeräte (104, 105) aus mittels der Router-Bekanntgaben innerhalb ihres jeweiligen Teilnetzes (202-204) verbreiteten IPv6-Präfixen selbständig ihre IPv6-Adresse erzeugen,
- Kommunikationsendgeräte (104, 105) aus topologischen und/oder hierarchischen Namensbestandteilen und einem innerhalb ihres jeweiligen Teilnetzes (202-204) eindeutigen Namensbestandteil selbständig ihren Gerätenamen erzeugen,
- Kommunikationsgeräte (103-105) jeweils einen Namensdienst-Client (130) für dynamisches DNS umfassen, mittels dessen anhand der IPv6-Adresse des Namensdienst-Servers (101) eine Speicherung einer IPv6-Adresse und eines zugeordneten Gerätenamens des jeweiligen Kommunikationsgeräts im Namensdienst-Server anfordert wird,
- IPv6-Präfixe durch Router (102, 103) mittels Nachrichten (301, 302) mit Router-Bekanntgaben in jeweils unterlagerten Teilnetzen (202-204) verbreitet werden, wobei die Router-Bekanntgaben einen topologischen und/oder hierarchischen Namensbestandteil des jeweiligen Routers umfassen und wobei der topologische und/oder hierarchische Namensbestandteil einer räumlichen oder hierarchischen Anordnung des jeweiligen Routers zugeordnet ist,
- Router-Bekanntgaben mit Namensinformationen aus überlagerten Teilnetzen (201-204) durch unterlagerten Teilnetzen (202-204) zugeordnete Router (102, 103) entgegen genommen und um einen dem jeweiligen Router zugeordneten topologischen und/oder hierarchischen Namensbestandteil ergänzt und innerhalb des jeweiligen unterlagerten Teilnetzes verbreitet werden, und bei dem die Informationen über die IPv6-Adresse des Namensdienst-Servers (101) durch Router empfangen und mittels Router-Bekanntgaben innerhalb ihres unterlagerten Teilnetzes verbreitet werden.

2. Verfahren nach Anspruch 1,
bei dem der Namensdienst-Server ein Domain Name System Server ist, der einen Namensdienst an Namensdienst-Clients von IPv6-basierten Kommunikationsgeräten bereitstellt.

3. Verfahren nach einem der Ansprüche 1 oder 2,
bei dem der Namensdienst-Server keine Router-Funktionseinheit umfasst.

4. Verfahren nach einem der Ansprüche 1 bis 3,
bei dem die Kommunikationsgeräte anhand der IPv6-Adresse des Namensdient-Servers selbständig eine Speicherung ihrer Gerätename-Adress-Zuordnung im Namensdient-Server entsprechend RFC 2136 anfordern.

5. Verfahren nach einem der Ansprüche 1 bis 4,
bei dem der Namensdienst-Server eine Sendeeinheit zur Erzeugung und Übermittlung von Nachrichten mit Router-Bekanntgaben umfasst, welche die IPv6-Adresse des Namensdienst-Servers umfassen.

6. Verfahren nach Anspruch 5,
bei dem die Nachrichten, welche die IPv6-Adresse des Namensdienst-Servers umfassen, entsprechend RFC 4861 und RFC 6106 übermittelt werden.

7. Verfahren nach einem der Ansprüche 1 bis 6,
bei dem Router-Bekanntgaben aus überlagerten Teilnetzen durch unterlagerten Teilnetzen zugeordnete Router um einen dem jeweiligen Router zugeordneten topologischen und/oder hierarchischen Namensbestandteil ergänzt werden.

8. Verfahren nach einem der Ansprüche 1 bis 7,
bei dem die um einen dem jeweiligen Router zugeordneten topologischen und/oder hierarchischen Namensbestandteil und um die IPv6-Adresse des Namensdienst-Servers ergänzten Router-Bekanntgaben mittels einer jeweiligen Funktionseinheit zur Verbreitung von Router-Bekanntgaben innerhalb des jeweiligen unterlagerten Teilnetzes verbreitet werden.

9. Verfahren nach Anspruch 8,
bei dem in jeden Router jeweils eine Empfangseinheit zur Entgegennahme und Auswertung von Nachrichten mit Router-Bekanntgaben sowie eine Funktionseinheit zur Verbreitung von Router-Bekanntgaben integriert sind.

10. Verfahren nach einem der Ansprüche 1 bis 9,
bei dem die Nachrichten mit Router-Bekanntgaben entsprechend Internet Control Message Protocol Version 6 übermittelt werden.

## Claims

1. Method for providing a name service within an industrial automation system, in which
- a name service server (101) of the industrial automation system transmits messages (301) containing router notifications which comprise information relating to an IPv6 address of the name service server,
- communication terminals (104, 105) independently generate their IPv6 address from IPv6 prefixes disseminated within their respective subnetwork (202-204) by means of the router notifications,
- communication terminals (104, 105) independently generate their device name from topological and/or hierarchical name components and a name component which is unique within their respective subnetwork (202-204),
- communication devices (103-105) each comprise a name service client (130) for dynamic DNS, by means of which storage of an IPv6 address and an associated device name of the respective communication device in the name service server is requested on the basis of the IPv6 address of the name service server (101),
- IPv6 prefixes are disseminated in respective lower-level subnetworks (202-204) by routers (102, 103) by means of messages (301, 302) containing router notifications, the router notifications comprising a topological and/or hierarchical name component of the respective router, and the topological and/or hierarchical name component being assigned to a spatial or hierarchical arrangement of the respective router,
- router notifications containing name information from higher-level subnetworks (201-204) are received by routers (102, 103) assigned to lower-level subnetworks (202-204) and are supplemented with a topological and/or hierarchical name component assigned to the respective router and are disseminated within the respective lower-level subnetwork, and in which the information relating to the IPv6 address of the name service server (101) is received by routers and is disseminated within their lower-level subnetwork by means of router notifications.

2. Method according to Claim 1,
in which the name service server is a Domain Name System server which provides name service clients of IPv6-based communication devices with a name service.

3. Method according to either of Claims 1 and 2,
in which the name service server does not comprise a router functional unit.

4. Method according to one of Claims 1 to 3,
in which the communication devices independently request storage of their device name/address assignment in the name service server in accordance with RFC 2136 on the basis of the IPv6 address of the name service server.

5. Method according to one of Claims 1 to 4,
in which the name service server comprises a transmitting unit for generating and transmitting messages containing router notifications which comprise the IPv6 address of the name service server.

6. Method according to Claim 5,
in which the messages which comprise the IPv6 address of the name service server are transmitted in accordance with RFC 4861 and RFC 6106.

7. Method according to one of Claims 1 to 6,
in which router notifications from higher-level subnetworks are supplemented, by routers assigned to lower-level subnetworks, with a topological and/or hierarchical name component assigned to the respective router.

8. Method according to one of Claims 1 to 7,
in which the router notifications which have been supplemented with a topological and/or hierarchical name component assigned to the respective router and with the IPv6 address of the name service server are disseminated within the respective lower-level subnetwork by means of a respective functional unit for disseminating router notifications.

9. Method according to Claim 8,
in which a receiving unit for receiving and evaluating messages containing router notifications and a functional unit for disseminating router notifications are respectively integrated in each router.

10. Method according to one of Claims 1 to 9,
in which the messages containing router notifications are transmitted in accordance with the Internet Control Message Protocol Version 6.

## Revendications

1. Procédé de mise à disposition d'un service de dénomination dans un système d'automatisation industriel, dans lequel
- un serveur-service de dénomination (101) du système d'automatisation industriel envoie des messages (301) par des notifications-routeur qui comprennent des informations sur une adresse IPv6 du serveur-service de dénomination,
- des appareils (104, 105) terminaux de communication produisent automatiquement leur adresse IPv6 à partir de préfixes IPv6 diffusés au moyen des notifications-routeur au sein de leur sous-réseau (202 à 204) respectif,
- des appareils (104, 105) terminaux de communication produisent automatiquement leur dénomination d'appareil à partir de parties constitutives topologiques et/ou hiérarchiques de dénomination et d'une partie constitutive de dénomination univoque au sein de leur sous-réseau (202 à 204) respectif,
- des appareils (103 à 105) de communication comprennent respectivement un client-service de dénomination (130) pour un DNS dynamique, au moyen duquel, à l'aide de l'adresse IPv6 du serveur-service de dénomination (101), une mémorisation d'une adresse IPv6 et une dénomination d'appareil associée de l'appareil de communication respectif dans le serveur-service de dénomination est requise,
- des préfixes IPv6 sont diffusés par routeur(102, 103), au moyen de messages (301, 302), par des notifications-routeur, dans respectivement des sous-réseaux (202 à 204) sous-jacents, les notifications-routeur comprenant une partie constitutive de dénomination topologique et/ou hiérarchique du routeur respectif et la partie constitutive de dénomination topologique et/ou hiérarchique étant associée à un agencement dans l'espace ou hiérarchique du routeur respectif,
- des notifications-routeur ayant des informations de dénomination sont reçues de sous-réseaux (201 à 204) sur-jacents par des routeurs (102, 103) associés à des sous-réseaux (202 à 204) sous-jacents et complétées d'une partie constitutive de dénomination topologique et/ou hiérarchique associée au routeur respectif et diffusées au sein du sous-réseau sous-jacent respectif et dans lequel les informations sont reçues par routeur par l'intermédiaire de l'adresse IPv6 du serveur-service de dénomination (101) et diffusées au moyen de notifications-routeur au sein du sous-réseau sous-jacent.

2. Procédé suivant la revendication 1,
dans lequel le serveur-service de dénomination est un serveur de système de nom de domaine, qui met un service de dénomination à disposition de clients de service de dénomination par des appareils de communication reposant sur IPv6.

3. Procédé suivant l'une des revendications 1 ou 2,
dans lequel le serveur-service de dénomination n'a pas d'unité fonctionnelle de routeur.

4. Procédé suivant l'une des revendications 1 à 3,
dans lequel
les appareils de communication demandent, à l'aide de l'adresse IPv6 du serveur-service de dénomination, automatiquement une mémorisation de leur association dénomination d'appareil-adresse dans le serveur-service de dénomination, conformément à RFC 2136.

5. Procédé suivant l'une des revendications 1 à 4,
dans lequel
le serveur-service de dénomination comprend une unité d'émission pour produire et transmettre des messages ayant des notifications-routeur, qui comprennent l'adresse IPv6 du serveur-service de dénomination.

6. Procédé suivant la revendication 5,
dans lequel
les messages, qui comprennent l'adresse IPv6 du serveur-service de dénomination, sont transmis conformément à RFC 4861 et RFC 6106.

7. Procédé suivant l'une des revendications 1 à 6,
dans lequel
des notifications de routeur, provenant de sous-réseaux sur-jacents, sont complétées par routeur, associé à des sous-réseaux sous-jacents, d'une partie constitutive de dénomination topologique et/ou hiérarchique associée au routeur respectif.

8. Procédé suivant l'une des revendications 1 à 7,
dans lequel
les notifications-routeur, complétées d'une partie constitutive de dénomination topologique et/ou hiérarchique associée à chaque routeur et de l'adresse IPv6 du serveur-service de dénomination, sont diffusées au moyen d'une unité fonctionnelle respective de diffusion de notifications-routeur au sein du sous-réseau sous-jacent respectif.

9. Procédé suivant la revendication 8,
dans lequel
il est intégré, dans chaque routeur, respectivement une unité de réception et d'exploitation de messages ayant des notifications-routeur ainsi qu'une unité fonctionnelle de diffusion de notifications-routeur.

10. Procédé suivant l'une des revendications 1 à 9,
dans lequel
les messages ayant des notifications-routeur sont transmis, conformément à la version 6 du protocole internet contrôle message.
